(19) Europäisches Patentamt European Patent Office Office européen des brevets

(11) **EP 4 276 063 B1**

(12) **EUROPEAN PATENT SPECIFICATION**

(45) Date of publication and mention
of the grant of the patent:
**15.04.2026 Bulletin 2026/16**

(21) Application number: **22922877.0**

(22) Date of filing: **29.01.2022**

(51) International Patent Classification (IPC):
**C01B 17/45** $^{(2006.01)}$   **C25B 1/245** $^{(2021.01)}$

(52) Cooperative Patent Classification (CPC):
**C01B 17/4576; C25B 1/245**

(86) International application number:
**PCT/CN2022/075017**

(87) International publication number:
**WO 2023/142047 (03.08.2023 Gazette 2023/31)**

(54) **METHOD FOR PREPARING SULFURYL FLUORIDE BY ELECTROFLUORINATION**

VERFAHREN ZUR HERSTELLUNG VON SULFURYLFLUORID DURCH ELEKTROFLUORIERUNG

PROCÉDÉ DE PRÉPARATION DE FLUORURE DE SULFURYLE PAR ÉLECTROFLUORATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.11.2023 Bulletin 2023/46**

(73) Proprietors:
• **Contemporary Amperex Technology Co., Limited**
**Ningde City, Fujian 352100 (CN)**
• **Catl-Sicong Novel Materials Co., Ltd**
**Longyan City, Fujian 364204 (CN)**

(72) Inventors:
• **CHENG, Sicong**
**Longyan City, Fujian 364204 (CN)**
• **HUANG, Qisen**
**Ningde City, Fujian 352100 (CN)**

(74) Representative: **Lorenz Seidler Gossel Part. mbB**
**Widenmayerstr. 23**
**80538 München (DE)**

(56) References cited:
CN-A- 1 678 520      CN-A- 102 351 681
CN-A- 104 085 864   CN-A- 106 946 231
GB-A- 963 824         JP-B1- S4 626 094
US-A- 3 497 427       US-A- 4 003 984
US-B1- 6 238 642

## Description

## Technical Field

The present application relates to the field of synthesis of industrial chemicals, particularly to a method for preparing sulfuryl fluoride.

## Background Art

Sulfuryl fluoride ($SO_2F_2$) is a colorless and odorless gas at room temperature under atmospheric pressure, has chemical inertness and is easy to decompose at a high temperature. Sulfuryl fluoride has the characteristics of a strong diffusion permeability, broad-spectrum insect killing, dosage economy, a low residual amount, a high insect-killing speed, a short gas dispersion time, usability at a low temperature, no effects on germination rate, a low toxicity, etc. and is thus more and more widely used in warehouses, cargo ships, containers, buildings, reservoir dams, termite control, and the control of overwintering pests in gardens and trunk-boring pests in living trees. Moreover, when used as an insecticide, a bactericide and a fumigant, sulfuryl fluoride does not destroy the ozone layer in the atmosphere and therefore is widely used in these fields.

In recent years, sulfuryl fluoride has begun to be used as a raw material for the synthesis of lithium bisfluorosulfonimide. Lithium bisfluorosulfonimide, as a novel lithium salt electrolyte material with a wide application prospect for lithium ion batteries, can improve the cycling performance and rate capability of a power battery when used in the power battery. Therefore, sulfuryl fluoride also has very good development prospects in the field of lithium-ion batteries.

At present, common methods for preparing sulfuryl fluoride comprise: direct fluorination using sulfur dioxide and fluorine gas as main raw materials; an anhydrous hydrogen fluoride method using sulfur dioxide, chlorine gas and anhydrous hydrogen fluoride as raw materials; a nitrosyl fluoride method using sulfur dioxide and nitrosyl fluoride as main raw materials; a sulfuryl chloride fluorination method, wherein sulfuryl chloride is fluorinated to synthesize sulfuryl fluoride; a fluorosulfonic acid method using fluorosulfonic acid and barium chloride as main raw materials; and electrofluorination, wherein sulfur dioxide and anhydrous hydrogen fluoride are used as main raw materials for an electrofluorination reaction, etc. Among these preparation methods, the electrofluorination method uses low-cost electric energy as a "catalyst", and thus the cost is low. However, in existing electrofluorination methods, since sulfur dioxide and anhydrous hydrogen fluoride are used as main raw materials, this preparation method requires an inert gas such as helium as a diluent gas and requires a large amount of anhydrous hydrogen fluoride, resulting in an increase in cost. In addition, the yield and purity of sulfuryl fluoride obtained by this preparation method are not high and an additional purification process is required, so industrial production is not easy. An example for the process described is disclosed in US 3 497 427 A.

On the basis of the above situation, there is an urgent need in the art to provide a method for efficiently preparing sulfuryl fluoride by electrofluorination, that is, there is a need to provide a method for preparing sulfuryl fluoride by electrofluorination, which has a low production cost of sulfuryl fluoride, a high product purity and a high yield and is suitable for industrial production.

## Summary of the Invention

The present application is made in view of the above problems, and aims to provide a method for preparing sulfuryl fluoride by electrofluorination. By means of the present application, the production cost of sulfuryl fluoride can be reduced, and the purity and yield of sulfuryl fluoride can be improved, thus making it suitable for industrial production.

In order to achieve the above object, the present application provides a method for preparing sulfuryl fluoride by electrofluorination. The method for preparing sulfuryl fluoride by electrofluorination comprises a step of subjecting sulfur dioxide and a hydrogen fluoride complex to an electrofluorination reaction in an electrolytic cell.

According to the present application, by using the sulfur dioxide and the hydrogen fluoride complex as main raw materials for the electrofluorination reaction, the production cost of sulfuryl fluoride can be reduced, the purity and yield of sulfuryl fluoride can be improved, thus making it suitable for industrial production.

According to the invention, the above hydrogen fluoride complex is represented by a general formula $R \cdot (HF)_n$, in which R represents an organic matter molecule, n represents a number greater than 0 and less than or equal to 12, and optionally, n represents a number greater than 2 and less than or equal to 12.

According to the present application, by selecting the hydrogen fluoride complex represented by the above general formula $R \cdot (HF)_n$, the process can be easily operated, the reaction temperature is easy to control, and the quality of sulfuryl fluoride and the safety of the process can be ensured.

In any embodiment, the above hydrogen fluoride complex may be at least one selected from a tri(lower alkyl) amine·hydrogen fluoride complex, an tetra(lower alkyl)ammonium fluoride·hydrogen fluoride complex and an aza-arene·hydrogen fluoride complex, and optionally, the above hydrogen fluoride complex may be at least one selected from a triethylamine·hydrogen fluoride complex, a pyridine·hydrogen fluoride complex, a melamine·hydrogen fluoride complex, a tetra-n-butylammonium difluoride·hydrogen fluoride complex, a tetramethylammonium fluoride·hydrogen fluoride complex, a tetraethylammonium fluoride·hydrogen fluoride complex and an N,N-diisopropylethylamine·hydrogen fluoride complex.

According to the present application, by using the above hydrogen fluoride complex, the reaction conditions are mild. Since the above hydrogen fluoride complex is a reagent with a low toxicity and low risk, the pollution can be reduced and the generation of large amounts of three wastes (solid waste, liquid waste and gas waste) is avoided, and the production process is simple and convenient, easy to operate and high in safety factor.

In any embodiment, no solvent may be used or at least one selected from acetonitrile, sulfolane, tetrahydrofuran, dimethyl carbonate, ethyl methyl carbonate, diethyl carbonate, ethyl acetate, propylene carbonate, isopropyl ether, N,N-dimethylformamide, N,N-dimethylacetamide, N-methyl-2-pyrrolidone, dimethyl sulfoxide, carbon tetrachloride, trichloroethylene and pyrrole may be used as a solvent in the above electrofluorination reaction.

According to the present application, by using the sulfur dioxide and the hydrogen fluoride complex as main raw materials for the electrofluorination reaction, no solvent may be used, so the cost can be reduced and the pollution can be reduced. Moreover, the inventor of the present application has found that the yield and purity of sulfuryl fluoride can be further improved when no solvent is used. However, the solvent effect can have a certain influence on the reaction rate, the reaction equilibrium and even the reaction mechanism, and the solvent can dilute a substrate, reduce the reaction temperature and improve the reaction efficiency. From these perspectives, the above solvents may be used.

In any embodiment, no diluent gas may be used in the above electrofluorination reaction.

According to the present application, by using the sulfur dioxide and the hydrogen fluoride complex as main raw materials for the electrofluorination reaction, no diluent gas may be used, so the cost can be reduced.

In any embodiment, a molar ratio of the above sulfur dioxide to the above hydrogen fluoride complex may be 1 : 3 to 1 : 10 in the above electrofluorination reaction.

According to the present application, by making the molar ratio of the sulfur dioxide to the hydrogen fluoride complex be within the above range, the raw materials can be fully reacted, which further improves the yield of sulfuryl fluoride.

In any embodiment, an electrode used in the above electrofluorination reaction may be Fe | C, Pt | C, Pt | Ni, Pt | Ag, Pt | Pt, C | C or Cu | C.

In any embodiment, a direct current regulated power supply may be used in the above electrofluorination reaction, wherein a voltage range may be 2-7 V and/or a current range may be 10-100 A.

In any embodiment, constant-temperature stirring may be performed in the above electrofluorination reaction, wherein the stirring speed may be 300-2000 rpm, the stirring temperature may be 10-30°C and the stirring time may be 10-25 h.

According to the present application, by selecting the above reaction conditions, that is, by selecting the electrode, the power supply, the voltage value, the current value, the stirring method, the stirring speed, the stirring temperature and the stirring time, etc., the reaction is performed fully, which can further improve the reaction efficiency and further improve the yield and purity of sulfuryl fluoride.

In any embodiment, an alkali metal fluoride may be used as a conductive additive in the above electrofluorination reaction. The above alkali metal fluoride may be at least one selected from lithium fluoride, sodium fluoride and potassium fluoride, and the addition amount of the above alkali metal fluoride may be 4-10 wt% of the hydrogen fluoride complex.

According to the present application, by using the above conductive additive in the above electrofluorination reaction, the conductivity of the electrofluorination reaction solution can be improved, and the reaction direction of the electrofluorination reaction is not affected, so that the yield and purity of sulfuryl fluoride can be further improved. In addition, the above conductive additive is not consumed in the electrofluorination reaction process, and also does not cause corrosion to instruments and equipment. In addition, by making the addition amount of the alkali metal fluoride to be 4-10 wt% of the hydrogen fluoride complex, the yield and purity of sulfuryl fluoride can be further improved.

Invention effects

According to the present application, the production cost of sulfuryl fluoride can be reduced, and the purity and yield of sulfuryl fluoride can be improved, thus making it suitable for industrial production.

**Detailed Description of Embodiments**

Hereinafter, embodiments of the method for preparing sulfuryl fluoride by electrofluorination in the present application are specifically disclosed in detail. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the descriptions below are provided for enabling those skilled in the art to fully understand the present application, rather than limiting the subject matter disclosed in claims.

"Ranges" disclosed in the present application are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed, and maximum range values 3, 4, and 5 are listed, the following ranges are all contemplated: 1-3, 1-4, 1-5, 2-3, 2-4 and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed herein, and "0-5" is just an abbreviated representation of combinations of these numerical values. In addition, when a parameter is expressed as an integer of $\geq 2$, it is equivalent to disclosing that the parameter is, for example, an integer of 2, 3, 4, 5, 6, 7, 8, 9, 10, 11, 12, and the like.

All the embodiments and optional embodiments of the present application can be combined with one another to form new technical solutions, unless otherwise stated.

All technical features and optional technical features of the present application can be combined with one another to form a new technical solution, unless otherwise stated.

Unless otherwise stated, all the steps of the present application can be performed sequentially or randomly, preferably sequentially. For example, the method including steps (a) and (b) indicates that the method may include steps (a) and (b) performed sequentially, and may also include steps (b) and (a) performed sequentially. For example, reference to "the method may also include step (c)" indicates that step (c) may be added to the method in any order, e.g., the method may include steps (a), (b) and (c), steps (a), (c) and (b), and also steps (c), (a) and (b), etc.

The terms "comprise" and "include" mentioned in the present application are open-ended or closed-ended, unless otherwise stated. For example, the terms "comprise" and "include" may mean that other components not listed may also be comprised or included, or only the listed components may be comprised or included.

In the present application, the term "or" is inclusive unless otherwise specified. For example, the phrase "A or B" means "A, B, or both A and B." More specifically, a condition "A or B" is satisfied by any one of the following: A is true (or present) and B is false (or not present); A is false (or not present) and B is true (or present); or both A and B are true (or present).

The present application provides a method for preparing sulfuryl fluoride by electrofluorination. Hereinafter, the method for preparing sulfuryl fluoride by electrofluorination in the present application is described in detail.

The method for preparing sulfuryl fluoride by electrofluorination in the present application comprises a step of subjecting sulfur dioxide and a hydrogen fluoride complex to an electrofluorination reaction in an electrolytic cell.

In an existing electrofluorination process, since sulfur dioxide and anhydrous hydrogen fluoride are used as raw materials, this process requires an inert gas such as helium as a diluent gas and requires a large amount of anhydrous hydrogen fluoride, resulting in an increase in cost. In addition, the yield and purity of sulfuryl fluoride obtained by the process are not high and an additional purification process is required. Moreover, anhydrous hydrogen fluoride is easy to gasify to generate a large amount of white smoke of anhydrous hydrogen fluoride, the reaction is intense, and the reaction process is not easy to control. The inventor of the present application has found by means of repeated researches that by subjecting a hydrogen fluoride complex as a fluorine source and sulfur dioxide to an electrofluorination reaction (that is, using a mild hydrogen fluoride complex reagent in place of a harmful anhydrous hydrogen fluoride reagent for reaction), the reaction conditions are mild and no corrosion is caused to reaction vessels.

Although the mechanism is not yet clear, the inventor of the present application has unexpectedly discovered that: by using the sulfur dioxide and the hydrogen fluoride complex as the main raw materials for the electrofluorination reaction, the purity and yield of sulfuryl fluoride can be improved, that is, the purity of sulfuryl fluoride can be 90% or more and the yield of sulfuryl fluoride can be 50% or more. In this way, the method for preparing sulfuryl fluoride by electrofluorination in the present application does not require special purification procedures. Moreover, the method for preparing sulfuryl fluoride by electrofluorination in the present application may not use a solvent and a diluent gas. Therefore, the method for preparing sulfuryl fluoride by electrofluorination in the present application can reduce the production cost.

In some embodiments, the above hydrogen fluoride complex may be represented by a general formula $R \cdot (HF)_n$, in which R represents an organic matter molecule, n represents a number greater than 0 and less than or equal to 12. According to the present application, by selecting the hydrogen fluoride complex represented by the above general formula $R \cdot (HF)_n$, the process can be easily operated, the reaction temperature is easy to control, and the quality of sulfuryl fluoride and the safety of the process can be ensured. When the above n is a number less than or equal to 2, the hydrogen fluoride complex is mostly a solid, which greatly hinders the stirring in the reaction and leads to the failure of timely removal of reaction heat. As a result, the local temperature in the electrolytic cell is too high, which affects the quality of sulfuryl fluoride and increases the risk of production. Therefore, preferably n represents a number greater than 2 and less than or equal to 12, more preferably n represents a number greater than or equal to 3 and less than or equal to 10, and further preferably n represents a number greater than or equal to 3 and less than or equal to 5. In addition, examples of R, for example, can comprise tri(lower alkyl)amine, tetra(lower alkyl)ammonium fluoride, aza-arene, etc. Among them, the lower alkyl may be an alkyl with 1-12 carbon atoms, preferably an alkyl with 1-8 carbon atoms, more preferably an alkyl with 1-6 carbon atoms, and even more preferably an alkyl with 1-4 carbon atoms. Typical alkyl includes, but is not limited to, methyl, ethyl, propyl, butyl, pentyl, hexyl, etc. It should be understood that the "lower alkyl" mentioned herein comprises an alkyl with all possible configurations and conformations. For example, as mentioned herein, the "propyl" comprises n-propyl and isopropyl, the "butyl" comprises n-butyl, isobutyl and tert-butyl, the "pentyl" includes n-pentyl, isopentyl, neopentyl, tert-amyl and pent-3-yl, etc.

In some embodiments, the above hydrogen fluoride complex may be at least one selected from a tri(lower alkyl)amine·hydrogen fluoride complex, an tetra(lower alkyl)ammonium fluoride·hydrogen fluoride complex and an aza-arene·hydrogen fluoride complex, and For example, examples of the above hydrogen fluoride complex can comprise a triethylamine·hydrogen fluoride complex, a pyridine·hydrogen fluoride complex, a melamine·hydrogen fluoride complex, a tetra-n-butylammonium·difluoride·hydrogen fluoride complex, a tetramethylammonium fluoride·hydrogen fluoride complex, a tetraethylammonium fluoride·hydrogen fluoride complex and an N,N-diisopropylethylamine·hydrogen fluoride complex, etc.

The above hydrogen fluoride complex is a nearly-neutral substance and a relatively mild fluorination reagent. By using such a hydrogen fluoride complex, the reaction conditions are mild. Since the above hydrogen fluoride complex is a reagent with a low toxicity and low risk, the pollution can be reduced and the generation of large amounts of three wastes (solid waste, liquid waste and gas waste) is avoided, and the production process is simple and convenient, easy to operate and high in safety factor.

The above hydrogen fluoride complex can be prepared by means of common methods, wherein, for example, organic matter raw materials (e.g., tri(lower alkyl)amine, tetra(lower alkyl)ammonium fluoride, aza-arene, etc.) and hydrogen fluoride are reacted under full stirring to generate an organic matter hydrogen fluoride complex. The specific method comprises: switching on chilled water inlet and outlet valves of a pipeline reactor in advance, cooling to -5°C to -20°C (preferably -10°C), switching on feed valves of hydrogen fluoride and organic matter raw materials, adjusting the fluxes of the two materials, continuously conveying the liquid hydrogen fluoride and the organic matter raw materials to a tubular reactor by means of a metering pump, respectively, in a way that the obtained organic matter-hydrogen fluoride complex meets a general formula $R\cdot(HF)_n$ (R represents an organic matter molecule, and n represents a number greater than 0 and less than or equal to 12), and fully stirring and reacting same so as to obtain the hydrogen fluoride complex. The above hydrogen fluoride complex can also be commercially available products.

In some embodiments, in the above electrofluorination reaction, the hydrogen fluoride complex is added to an electrolytic cell, and sulfur dioxide is introduced under stirring, or the hydrogen fluoride complex and the sulfur dioxide are mixed in advance and added to the electrolytic cell together; and then, an electrode is connected, a power supply is turned on, the materials are fully reacted under stirring, and thus sulfuryl fluoride can be obtained.

In the above electrofluorination reaction, the following reaction conditions may be set.

The electrode used in the above electrofluorination reaction may be Fe|C, Pt|C, Pt|Ni, Pt|Ag, Pt|Pt, C|C or Cu|C, preferably Pt | Pt.

A direct current regulated power supply may be used in the above electrofluorination reaction, wherein the voltage range may be 2-7 V, preferably 2-5 V; and the current range may be 10-100 A, preferably 20-50 A, more preferably 30-40 A.

constant-temperature stirring may be performed in the above electrofluorination reaction, wherein the stirring speed may be 300-2000 rpm, preferably 500-1500 rpm, more preferably 500-1000 rpm, the stirring temperature may be 10-30°C, preferably 15-20°C, and the stirring time may be 10-25 h, preferably 20-25 h.

According to the present application, by selecting the above reaction conditions, that is, by selecting the electrode, the power supply, the voltage value, the current value, the stirring method, the stirring speed, the stirring temperature and the stirring time, etc., the reaction is performed fully, which can further improve the reaction efficiency and can further improve the yield and purity of sulfuryl fluoride.

In some embodiments, a molar ratio of the above sulfur dioxide to the above hydrogen fluoride complex may be 1 : 3 to 1 : 10, preferably 1 : 3 to 1 : 5, in the above electrofluorination reaction.

According to the present application, by making the molar ratio of the sulfur dioxide to the hydrogen fluoride complex be within the above range, the raw materials can be fully reacted, which can further improve the yield and purity of sulfuryl fluoride.

In some embodiments, an alkali metal fluoride may be used as a conductive additive in the above electrofluorination reaction. Examples of the above alkali metal fluoride can comprise lithium fluoride (LiF), sodium fluoride (NaF) and potassium fluoride (KF), etc., preferably potassium fluoride (KF). The addition amount of the above alkali metal fluoride may be 4-10 wt%, preferably 6-8 wt%, of the hydrogen fluoride complex.

According to the present application, by using the above conductive additive in the above electrofluorination reaction, the conductivity of the electrofluorination reaction solution can be improved, and the reaction direction of the electrofluorination reaction is not affected, so that the yield and purity of sulfuryl fluoride can be further improved. In addition, the above conductive additive is not consumed in the electrofluorination reaction process, and also does not cause corrosion to instruments and equipment. In addition, by making the addition amount of the alkali metal fluoride to be 4-10 wt% of the hydrogen fluoride complex, the yield and purity of sulfuryl fluoride can be further improved. The conductive solvent and the hydrogen fluoride complex may be combined in advance and added to the electrolytic cell together.

In some embodiments, no solvent may be used or at least one selected from acetonitrile, sulfolane, tetrahydrofuran, dimethyl carbonate, ethyl methyl carbonate, diethyl carbonate, ethyl acetate, propylene carbonate, isopropyl ether, N,N-dimethylformamide, N,N-dimethylacetamide, N-methyl-2-pyrrolidone, dimethyl sulfoxide, carbon tetrachloride, trichloroethylene and pyrrole may be used as a solvent in the above electrofluorination reaction.

According to the present application, by using the sulfur dioxide and the hydrogen fluoride complex as main raw materials for the electrofluorination reaction, no solvent may be used, so the cost can be reduced and the pollution can be reduced. Moreover, the inventor of the present application has found that the yield and purity of sulfuryl fluoride can be further improved when no solvent is used. However, the solvent effect can have a certain influence on the reaction rate, the reaction equilibrium and even the reaction mechanism, and the solvent can dilute a substrate, reduce the reaction temperature and improve the reaction efficiency. From these perspectives, the above solvents may be used. From the perspectives of further improving the reaction efficiency and the yield and purity of sulfuryl fluoride, preferably at least one of acetonitrile, N,N-dimethylformamide, sulfolane, propylene carbonate and dimethyl sulfoxide is used as a solvent, and more preferably at least one of acetonitrile, N,N-dimethylformamide and sulfolane is used as a solvent.

In some embodiments, no diluent gas may be used in the above electrofluorination reaction.

According to the present application, by using the sulfur dioxide and the hydrogen fluoride complex as main raw materials for the electrofluorination reaction, no diluent gas may be used, so the cost can be reduced. Specifically, in the prior art of using sulfur dioxide and anhydrous hydrogen fluoride as main raw materials for the electrofluorination reaction, it is necessary to use an inert gas such as helium as a diluent gas to dilute sulfur dioxide and then introduce the diluted sulfur dioxide into the electrolytic cell to control the composition of the reaction product or the cleavage of a sulfur-oxygen bond. However, the hydrogen fluoride complex is used as a fluorine source in the method for preparing sulfuryl fluoride by electrofluorination in the present application. Since the hydrogen fluoride complex is a relatively mild fluorination reagent, the reaction conditions are mild, and therefore no dilution gas is needed to add to control the reaction heat, thereby reducing the cost.

In addition, in the above electrofluorination reaction, sulfur dioxide can be directly added to the electrolytic cell and form small molecules without treatments such as a bubbling treatment. The hydrogen fluoride complex is used as a fluorine source in the method for preparing sulfuryl fluoride by electrofluorination in the present application. Since the hydrogen fluoride complex is a relatively mild fluorination reagent, the reaction conditions are mild. Therefore, the gaseous sulfur dioxide may be directly added to the electrolytic cell, thereby reducing preparation steps and preparation devices.

The purity of sulfuryl fluoride obtained by the method for preparing sulfuryl fluoride by electrofluorination in the present application can be 90% or more, and the yield of sulfuryl fluoride can be 50% or more. In this way, the method for preparing sulfuryl fluoride by electrofluorination in the present application does not require special purification procedures. However, in order to further purify sulfuryl fluoride, simple purification processes may also be performed, such as absorption with a sodium sulfite solution and rectification with a fractionating tower.

The sulfuryl fluoride obtained by the method for preparing sulfuryl fluoride by electrofluorination in the present application has a high purity and contains a very small amount of impurities, wherein, the possible impurities comprise $OF_2$, $F_4OS$, $SF_6$, etc., $OF_2$ and $F_4OS$ can be absorbed with a sodium sulfite solution, and $SF_6$ can be rectified with a fractionating tower.

The electrolytic cell used in the method for preparing sulfuryl fluoride by electrofluorination in the present invention can be an electrolytic cell commonly used in industry.

Examples

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product introduction. The reagents or instruments used therein for which manufacturers are not specified are all conventional products that are commercially available. In addition, unless otherwise specified, "%" represents a weight percentage or mass percentage.

Example 1

A triethylamine·hydrogen fluoride complex ($R·(HF)_n$, wherein n = 3) (1.6121 kg) as a fluorine source is added to an electrolytic cell, and sulfur dioxide is introduced under stirring, wherein a molar ratio of the sulfur dioxide to the triethylamine·hydrogen fluoride complex is 1 : 5. Then, an electrode (Pt | Pt) is connected, a power supply (a direct current regulated power supply, with a voltage of 3 V and a current of 30 A) is turned on, and the materials are fully reacted under constant-temperature stirring (with a stirring speed of 1000 rpm, a stirring temperature of 15°C, and a stirring time of 20 h) to obtain sulfuryl fluoride. The yield of sulfuryl fluoride is calculated and the purity of sulfuryl fluoride is detected. The results showed that the yield of sulfuryl fluoride is 78%, and the purity of sulfuryl fluoride is 97.8%.

Example 2

A triethylamine·hydrogen fluoride complex and potassium fluoride (KF) (conductive additive) with a mass percentage of 6% relative to the triethylamine·hydrogen fluoride complex are added to an electrolytic cell, and sulfur dioxide is introduced under stirring. Except for this, the operation is the same as that in example 1. The yield of sulfuryl fluoride is 81%, and the purity of sulfuryl fluoride is 99.2%.

Example 3

The triethylamine·hydrogen fluoride complex ($R·(HF)_n$, wherein n = 3) is changed to a pyridine·hydrogen fluoride complex ($R·(HF)_n$, wherein n = 3). Except for this, the operation is the same as that in example 2. The yield of sulfuryl fluoride is 67%, and the purity of sulfuryl fluoride is 97.2%.

Example 4

The triethylamine·hydrogen fluoride complex ($R·(HF)_n$, wherein n = 3) is changed to a tetraethylammonium fluoride·hydrogen fluoride complex ($R·(HF)_n$, wherein n = 3). Except for this, the operation is the same as that in example 2. The yield of sulfuryl fluoride is 63%, and the purity of sulfuryl fluoride is 95.7%.

Example 5

Before the triethylamine·hydrogen fluoride complex is added, acetonitrile as a solvent is added to an electrolytic cell in advance. Except for this, the operation is the same as that in example 2. The yield of sulfuryl fluoride is 78%, and the purity of sulfuryl fluoride is 97.5%.

Example 6

Before the triethylamine·hydrogen fluoride complex is added, N,N-dimethylformamide as a solvent is added to an electrolytic cell in advance. Except for this, the operation is the same as that in example 2. The yield of sulfuryl fluoride is 72%, and the purity of sulfuryl fluoride is 96.4%.

Example 7

Before the triethylamine·hydrogen fluoride complex is added, sulfolane as a solvent is added to an electrolytic cell in advance. Except for this, the operation is the same as that in example 2. The yield of sulfuryl fluoride is 70%, and the purity of sulfuryl fluoride is 95.7%.

Example 8

Before the triethylamine·hydrogen fluoride complex is added, propylene carbonate as a solvent is added to an electrolytic cell in advance. Except for this, the operation is the same as that in example 2. The yield of sulfuryl fluoride is 69%, and the purity of sulfuryl fluoride is 95.1%.

Example 9

Before the triethylamine·hydrogen fluoride complex is added, dimethyl sulfoxide as a solvent is added to an electrolytic cell in advance. Except for this, the operation is the same as that in example 2. The yield of sulfuryl fluoride is 68%, and the purity of sulfuryl fluoride is 94.6%.

Example 10

The electrode (Pt | Pt) is changed to an electrode (Pt | C). Except for this, the operation is the same as that in example 2. The yield of sulfuryl fluoride is 62%, and the purity of sulfuryl fluoride is 94.1%.

Example 11

The electrode (Pt | Pt) is changed to an electrode (C | C). Except for this, the operation is the same as that in example 2. The yield of sulfuryl fluoride is 58%, and the purity of sulfuryl fluoride is 93.7%.

Example 12

The electrode (Pt | Pt) is changed to an electrode (Cu | C). Except for this, the operation is the same as that in example 2. The yield of sulfuryl fluoride is 55%, and the purity of sulfuryl fluoride is 93.2%.

Example 13

The electrode (Pt | Pt) is changed to an electrode (Fe | C). Except for this, the operation is the same as that in example 2. The yield of sulfuryl fluoride is 50%, and the purity of sulfuryl fluoride is 92.4%.

Example 14

The molar ratio of the sulfur dioxide to the triethylamine·hydrogen fluoride complex is changed to 1 : 3. Except for this, the operation is the same as that in example 2. The yield of sulfuryl fluoride is 75%, and the purity of sulfuryl fluoride is 96.9%.

Example 15

The molar ratio of the sulfur dioxide to the triethylamine·hydrogen fluoride complex is changed to 1 : 10. Except for this, the operation is the same as that in example 2. The yield of sulfuryl fluoride is 73%, and the purity of sulfuryl fluoride is 96.2%.

Example 16

The voltage of the power supply is changed to 2 V. Except for this, the operation is the same as that in example 2. The yield of sulfuryl fluoride is 75%, and the purity of sulfuryl fluoride is 97.1%.

Example 17

The voltage of the power supply is changed to 5 V. Except for this, the operation is the same as that in example 2. The yield of sulfuryl fluoride is 72%, and the purity of sulfuryl fluoride is 96.6%.

Example 18

The voltage of the power supply is changed to 7 V. Except for this, the operation is the same as that in example 2. The yield of sulfuryl fluoride is 67%, and the purity of sulfuryl fluoride is 95.3%.

Example 19

The current of the power supply is changed to 10 A. Except for this, the operation is the same as that in example 2. The yield of sulfuryl fluoride is 60%, and the purity of sulfuryl fluoride is 94.3%.

Example 20

The current of the power supply is changed to 20 A. Except for this, the operation is the same as that in example 2. The yield of sulfuryl fluoride is 66%, and the purity of sulfuryl fluoride is 95.6%.

### Example 21

The current of the power supply is changed to 40 A. Except for this, the operation is the same as that in example 2. The yield of sulfuryl fluoride is 77%, and the purity of sulfuryl fluoride is 98.5%.

### Example 22

The current of the power supply is changed to 50 A. Except for this, the operation is the same as that in example 2. The yield of sulfuryl fluoride is 70%, and the purity of sulfuryl fluoride is 95.9%.

### Example 23

The current of the power supply is changed to 100 A. Except for this, the operation is the same as that in example 2. The yield of sulfuryl fluoride is 58%, and the purity of sulfuryl fluoride is 94.0%.

### Example 24

The stirring speed is changed to 300 rpm. Except for this, the operation is the same as that in example 2. The yield of sulfuryl fluoride is 74%, and the purity of sulfuryl fluoride is 98.1%.

### Example 25

The stirring speed is changed to 500 rpm. Except for this, the operation is the same as that in example 2. The yield of sulfuryl fluoride is 78%, and the purity of sulfuryl fluoride is 98.7%.

### Example 26

The stirring speed is changed to 1500 rpm. Except for this, the operation is the same as that in example 2. The yield of sulfuryl fluoride is 77%, and the purity of sulfuryl fluoride is 98.3%.

### Example 27

The stirring speed is changed to 2000 rpm. Except for this, the operation is the same as that in example 2. The yield of sulfuryl fluoride is 75%, and the purity of sulfuryl fluoride is 97.7%.

### Example 28

The stirring temperature is changed to 10°C. Except for this, the operation is the same as that in example 2. The yield of sulfuryl fluoride is 74%, and the purity of sulfuryl fluoride is 97.5%.

### Example 29

The stirring temperature is changed to 20°C. Except for this, the operation is the same as that in example 2. The yield of sulfuryl fluoride is 76%, and the purity of sulfuryl fluoride is 97.9%.

### Example 30

The stirring temperature is changed to 30°C. Except for this, the operation is the same as that in example 2. The yield of sulfuryl fluoride is 71%, and the purity of sulfuryl fluoride is 96.8%.

### Example 31

The stirring time is changed to 10 h. Except for this, the operation is the same as that in example 2. The yield of sulfuryl fluoride is 72%, and the purity of sulfuryl fluoride is 96.4%.

### Example 32

The stirring time is changed to 25 h. Except for this, the operation is the same as that in example 2. The yield of sulfuryl fluoride is 75%, and the purity of sulfuryl fluoride is 97.2%.

Example 33

The conductive additive is changed to sodium fluoride (NaF). Except for this, the operation is the same as that in example 2. The yield of sulfuryl fluoride is 72%, and the purity of sulfuryl fluoride is 95.7%.

Example 34

The conductive additive is changed to lithium fluoride (LiF). Except for this, the operation is the same as that in example 2. The yield of sulfuryl fluoride is 65%, and the purity of sulfuryl fluoride is 93.7%.

Example 35

The n value of the triethylamine·hydrogen fluoride complex as a fluorine source is changed to 2. Except for this, the operation is the same as that in example 2. The yield of sulfuryl fluoride is 69%, and the purity of sulfuryl fluoride is 94.3%.

Example 36

The n value of the triethylamine·hydrogen fluoride complex as a fluorine source is changed to 5. Except for this, the operation is the same as that in example 2. The yield of sulfuryl fluoride is 80%, and the purity of sulfuryl fluoride is 98.4%.

Example 37

The n value of the triethylamine·hydrogen fluoride complex as a fluorine source is changed to 10. Except for this, the operation is the same as that in example 2. The yield of sulfuryl fluoride is 76%, and the purity of sulfuryl fluoride is 96.3%.

Example 38

The n value of the triethylamine·hydrogen fluoride complex as a fluorine source is changed to 12. Except for this, the operation is the same as that in example 2. The yield of sulfuryl fluoride is 74%, and the purity of sulfuryl fluoride is 95.1%.

Example 39

The amount of potassium fluoride as a conductive additive is changed to 4%. Except for this, the operation is the same as that in example 2. The yield of sulfuryl fluoride is 78%, and the purity of sulfuryl fluoride is 96.9%.

Example 40

The amount of potassium fluoride as a conductive additive is changed to 8%. Except for this, the operation is the same as that in example 2. The yield of sulfuryl fluoride is 80%, and the purity of sulfuryl fluoride is 98.8%.

Example 41

The amount of potassium fluoride as a conductive additive is changed to 10%. Except for this, the operation is the same as that in example 2. The yield of sulfuryl fluoride is 75%, and the purity of sulfuryl fluoride is 96.3%.

Comparative Example 1

The fluorine source is changed to anhydrous hydrogen fluoride. Except for this, the operation is the same as that in example 2. The yield of sulfuryl fluoride is 42%, and the purity of sulfuryl fluoride is 85.1%.
The relevant data of examples 1-41 and comparative example 1 are shown in Tables 1-12 below, respectively.

Table 1

| Example/Comparative Example | Fluorine source | Solvent | Electrode | Molar ratio of sulfur dioxide to fluorine source | Voltage (V) | Current (A) | Stirring speed (rpm) | Stirring temperature (°C) | Stirring time (h) | Conductive additive | Yield of sulfuryl fluoride | Purity of sulfuryl fluoride |
|---|---|---|---|---|---|---|---|---|---|---|---|---|
| Example 1 | Triethyla mine·hydrogen fluoride complex | None | Pt \| Pt | 1 : 5 | 3 | 30 | 1000 | 15 | 20 | None | 78% | 97.8% |
| Example 2 | Triethyla mine·hydrogen fluoride complex | None | Pt \| Pt | 1 : 5 | 3 | 30 | 1000 | 15 | 20 | KF | 81% | 99.2% |
| Example 3 | Pyridine· hydrogen fluoride complex | None | Pt \| Pt | 1 : 5 | 3 | 30 | 1000 | 15 | 20 | KF | 67% | 97.2% |
| Example 4 | Tetraethy lammonium fluoride· hydrogen fluoride complex | None | Pt \| Pt | 1 : 5 | 3 | 30 | 1000 | 15 | 20 | KF | 63% | 95.7% |
| Comparative Example 1 | Anhydro us hydrogen fluoride | None | Pt \| Pt | 1 : 5 | 3 | 30 | 1000 | 15 | 20 | KF | 42% | 85.1% |

Table 2

| Examples | Fluorine source | Solvent | Electrode | Molar ratio of sulfur dioxide to fluorine source | Voltage (V) | Current (A) | Stirring speed (rpm) | Stirring temperature (°C) | Stirring time (h) | Conductive additive | Yield of sulfuryl fluoride | Purity of sulfuryl fluoride |
|---|---|---|---|---|---|---|---|---|---|---|---|---|
| Example 2 | Triethylamine·hydrogen fluoride complex | None | Pt \| Pt | 1 : 5 | 3 | 30 | 1000 | 15 | 20 | KF | 81% | 99.2% |
| Example 5 | Triethylamine·hydrogen fluoride complex | Acetonitrile | Pt \| Pt | 1 : 5 | 3 | 30 | 1000 | 15 | 20 | KF | 78% | 97.5% |
| Example 6 | Triethylamine·hydrogen fluoride complex | N,N-Dimethylformamide | Pt \| Pt | 1 : 5 | 3 | 30 | 1000 | 15 | 20 | KF | 72% | 96.4% |
| Example 7 | Triethylamine·hydrogen fluoride complex | Sulfolane | Pt \| Pt | 1 : 5 | 3 | 30 | 1000 | 15 | 20 | KF | 70% | 95.7% |
| Example 8 | Triethylamine·hydrogen fluoride complex | Propylene carbonate | Pt \| Pt | 1 : 5 | 3 | 30 | 1000 | 15 | 20 | KF | 69% | 95.1% |
| Example 9 | Triethylamine·hydrogen fluoride complex | Dimethyl sulfoxide | Pt \| Pt | 1 : 5 | 3 | 30 | 1000 | 15 | 20 | KF | 68% | 94.6% |

Table 3

| Examples | Fluorine source | Solvent | Electrode | Molar ratio of sulfur dioxide to fluorine source | Voltage (V) | Current (A) | Stirring speed (rpm) | Stirring temperature (°C) | Stirring time (h) | Conductive additive | Yield of sulfuryl fluoride | Purity of sulfuryl fluoride |
|---|---|---|---|---|---|---|---|---|---|---|---|---|
| Example 2 | Triethyla mine·-hyd rogen fluoride complex | None | Pt \| Pt | 1 : 5 | 3 | 30 | 1000 | 15 | 20 | KF | 81% | 99.2% |
| Example 10 | Triethyla mine·-hyd rogen fluoride complex | None | Pt \| C | 1 : 5 | 3 | 30 | 1000 | 15 | 20 | KF | 62% | 94.1% |
| Example 11 | Triethyla mine·-hyd rogen fluoride complex | None | C \| C | 1 : 5 | 3 | 30 | 1000 | 15 | 20 | KF | 58% | 93.7% |
| Example 12 | Triethyla mine·-hyd rogen fluoride complex | None | Cu \| C | 1 : 5 | 3 | 30 | 1000 | 15 | 20 | KF | 55% | 93.2% |
| Example 13 | Triethyla mine·-hyd rogen fluoride complex | None | Fe \| C | 1 : 5 | 3 | 30 | 1000 | 15 | 20 | KF | 50% | 92.4% |

Table 4

| Examples | Fluorine source | Solvent | Electrode | Molar ratio of sulfur dioxide to fluorine source | Voltage (V) | Current (A) | Stirring speed (rpm) | Stirring temperature (°C) | Stirring time (h) | Conductive additive | Yield of sulfuryl fluoride | Purity of sulfuryl fluoride |
|---|---|---|---|---|---|---|---|---|---|---|---|---|
| Example 2 | Triethylamine-hydrogen fluoride complex | None | Pt \| Pt | 1 : 5 | 3 | 30 | 1000 | 15 | 20 | KF | 81% | 99.2% |
| Example 14 | Triethylamine-hydrogen fluoride complex | None | Pt \| Pt | 1 : 3 | 3 | 30 | 1000 | 15 | 20 | KF | 75% | 96.9% |
| Example 15 | Triethylamine-hydrogen fluoride complex | None | Pt \| Pt | 1 : 10 | 3 | 30 | 1000 | 15 | 20 | KF | 73% | 96.2% |

Table 5

| Examples | Fluorine source | Solvent | Electrode | Molar ratio of sulfur dioxide to fluorine source | Volta ge (V) | Curre nt (A) | Stirri ng speed (rpm) | Stirring temper ature (°C) | Stirring time (h) | Conduc tive additiv e | Yield of sulfuryl fluoride | Purity of sulfuryl fluoride |
|---|---|---|---|---|---|---|---|---|---|---|---|---|
| Example 2 | Triethyla mine·- hyd rogen fluoride complex | None | Pt \| Pt | 1 : 5 | 3 | 30 | 1000 | 15 | 20 | KF | 81% | 99.2% |
| Example 16 | Triethyla mine·- hyd rogen fluoride complex | None | Pt \| Pt | 1 : 5 | 2 | 30 | 1000 | 15 | 20 | KF | 75% | 97.1% |
| Example 17 | Triethyla mine·- hyd rogen fluoride complex | None | Pt \| Pt | 1 : 5 | 5 | 30 | 1000 | 15 | 20 | KF | 72% | 96.6% |
| Example 18 | Triethyla mine·- hyd rogen fluoride complex | None | Pt \| Pt | 1 : 5 | 7 | 30 | 1000 | 15 | 20 | KF | 67% | 95.3% |

Table 6

| Examples | Fluorine source | Solvent | Electrode | Molar ratio of sulfur dioxide to fluorine source | Volta ge (V) | Cur rent (A) | Stirring speed (rpm) | Stirring temper ature (°C) | Stirring time (h) | Conduc tive additiv e | Yield of sulfuryl fluoride | Purity of sulfuryl fluoride |
|---|---|---|---|---|---|---|---|---|---|---|---|---|
| Example 2 | Triethyla mine·-hyd rogen fluoride complex | None | Pt \| Pt | 1 : 5 | 3 | 30 | 1000 | 15 | 20 | KF | 81% | 99.2% |
| Example 19 | Triethyla mine·-hyd rogen fluoride complex | None | Pt \| Pt | 1 : 5 | 3 | 10 | 1000 | 15 | 20 | KF | 60% | 94.3% |
| Example 20 | Triethyla mine·-hyd rogen fluoride complex | None | Pt \| Pt | 1 : 5 | 3 | 20 | 1000 | 15 | 20 | KF | 66% | 95.6% |
| Example 21 | Triethyla mine·-hyd rogen fluoride complex | None | Pt \| Pt | 1 : 5 | 3 | 40 | 1000 | 15 | 20 | KF | 77% | 98.5% |
| Example 22 | Triethyla mine·-hyd rogen fluoride complex | None | Pt \| Pt | 1 : 5 | 3 | 50 | 1000 | 15 | 20 | KF | 70% | 95.9% |
| Example 23 | Triethyla mine·-hyd rogen fluoride complex | None | Pt \| Pt | 1 : 5 | 3 | 100 | 1000 | 15 | 20 | KF | 58% | 94.0% |

EP 4 276 063 B1

16

Table 7

| Examples | Fluorine source | Solvent | Electrode | Molar ratio of sulfur dioxide to fluorine source | Voltage (V) | Current (A) | Stirring speed (rpm) | Stirring temperature (°C) | Stirring time (h) | Conductive additiv e | Yield of sulfuryl fluoride | Purity of sulfuryl fluoride |
|---|---|---|---|---|---|---|---|---|---|---|---|---|
| Example 2 | Triethyla mine·-hyd rogen fluoride complex | None | Pt \| Pt | 1 : 5 | 3 | 30 | 1000 | 15 | 20 | KF | 81% | 99.2% |
| Example 24 | Triethyla mine·-hyd rogen fluoride complex | None | Pt \| Pt | 1 : 5 | 3 | 30 | 300 | 15 | 20 | KF | 74% | 98.1% |
| Example 25 | Triethyla mine·-hyd rogen fluoride complex | None | Pt \| Pt | 1 : 5 | 3 | 30 | 500 | 15 | 20 | KF | 78% | 98.7% |
| Example 26 | Triethyla mine·-hyd rogen fluoride complex | None | Pt \| Pt | 1 : 5 | 3 | 30 | 1500 | 15 | 20 | KF | 77% | 98.3% |
| Example 27 | Triethyla mine·-hyd rogen fluoride complex | None | Pt \| Pt | 1 : 5 | 3 | 30 | 2000 | 15 | 20 | KF | 75% | 97.7% |

Table 8

| Examples | Fluorine source | Solvent | Electrode | Molar ratio of sulfur dioxide to fluorine source | Voltage (V) | Current (A) | Stirring speed (rpm) | Stirring temperature (°C) | Stirring time (h) | Conductive additive | Yield of sulfuryl fluoride | Purity of sulfuryl fluoride |
|---|---|---|---|---|---|---|---|---|---|---|---|---|
| Example 2 | Triethylamine-hydrogen fluoride complex | None | Pt \| Pt | 1 : 5 | 3 | 30 | 1000 | 15 | 20 | KF | 81% | 99.2% |
| Example 28 | Triethylamine-hydrogen fluoride complex | None | Pt \| Pt | 1 : 5 | 3 | 30 | 1000 | 10 | 20 | KF | 74% | 97.5% |
| Example 29 | Triethylamine-hydrogen fluoride complex | None | Pt \| Pt | 1 : 5 | 3 | 30 | 1000 | 20 | 20 | KF | 76% | 97.9% |
| Example 30 | Triethylamine-hydrogen fluoride complex | None | Pt \| Pt | 1 : 5 | 3 | 30 | 1000 | 30 | 20 | KF | 71% | 96.8% |

Table 9

| Examples | Fluorine source | Solvent | Electrode | Molar ratio of sulfur dioxide to fluorine source | Voltage (V) | Current (A) | Stirring speed (rpm) | Stirring temperature (°C) | Stirring time (h) | Conductive additive | Yield of sulfuryl fluoride | Purity of sulfuryl fluoride |
|---|---|---|---|---|---|---|---|---|---|---|---|---|
| Example 2 | Triethylamine-hydrogen fluoride complex | None | Pt \| Pt | 1 : 5 | 3 | 30 | 1000 | 15 | 20 | KF | 81% | 99.2% |
| Example 31 | Triethylamine-hydrogen fluoride complex | None | Pt \| Pt | 1 : 5 | 3 | 30 | 1000 | 15 | 10 | KF | 72% | 96.4% |
| Example 32 | Triethylamine-hydrogen fluoride complex | None | Pt \| Pt | 1 : 5 | 3 | 30 | 1000 | 15 | 25 | KF | 75% | 97.2% |

19

Table 10

| Examples | Fluorine source | Solvent | Electrode | Molar ratio of sulfur dioxide to fluorine source | Voltage (V) | Current (A) | Stirring speed (rpm) | Stirring temperature (°C) | Stirring time (h) | Conductive additive | Yield of sulfuryl fluoride | Purity of sulfuryl fluoride |
|---|---|---|---|---|---|---|---|---|---|---|---|---|
| Example 2 | Triethyla mine·hyd rogen fluoride complex | None | Pt \| Pt | 1 : 5 | 3 | 30 | 1000 | 15 | 20 | KF | 81% | 99.2% |
| Example 33 | Triethyla mine·hyd rogen fluoride complex | None | Pt \| Pt | 1 : 5 | 3 | 30 | 1000 | 15 | 20 | NaF | 72% | 95.7% |
| Example 34 | Triethyla mine·hyd rogen fluoride complex | None | Pt \| Pt | 1 : 5 | 3 | 30 | 1000 | 15 | 20 | LiF | 65% | 93.7% |

Table 11

| Examples | n value of fluorine source (triethylamine-hydrogen fluoride complex) | Solvent | Electrode | Molar ratio of sulfur dioxide to fluorine source | Voltage (V) | Current (A) | Stirring speed (rpm) | Stirring temperature (°C) | Stirring time (h) | Conductive additive | Yield of sulfuryl fluoride | Purity of sulfuryl fluoride |
|---|---|---|---|---|---|---|---|---|---|---|---|---|
| Example 2 | 3 | None | Pt \| Pt | 1 : 5 | 3 | 30 | 1000 | 15 | 20 | KF | 81% | 99.2% |
| Example 35 | 2 | None | Pt \| Pt | 1 : 5 | 3 | 30 | 1000 | 15 | 20 | KF | 69% | 94.3% |
| Example 36 | 5 | None | Pt \| Pt | 1 : 5 | 3 | 30 | 1000 | 15 | 20 | KF | 80% | 98.4% |
| Example 37 | 10 | None | Pt \| Pt | 1 : 5 | 3 | 30 | 1000 | 15 | 20 | KF | 76% | 96.3% |
| Example 38 | 12 | None | Pt \| Pt | 1 : 5 | 3 | 30 | 1000 | 15 | 20 | KF | 74% | 95.1% |

Table 12

| Examples | Fluorine source | Solvent | Electrode | Molar ratio of sulfur dioxide to fluorine source | Voltage (V) | Current (A) | Stirring speed (rpm) | Stirring temperature (°C) | Stirring time (h) | Conductive Amount of additive (KF) | Yield of sulfuryl fluoride | Purity of sulfuryl fluoride |
|---|---|---|---|---|---|---|---|---|---|---|---|---|
| Example 2 | Triethylamine-hydrogen fluoride complex | None | Pt\|Pt | 1 : 5 | 3 | 30 | 1000 | 15 | 20 | 6% | 81% | 99.2% |
| Example 39 | Triethylamine-hydrogen fluoride complex | None | Pt\|Pt | 1 : 5 | 3 | 30 | 1000 | 15 | 20 | 4% | 78% | 96.9% |
| Example 40 | Triethylamine-hydrogen fluoride complex | None | Pt\|Pt | 1 : 5 | 3 | 30 | 1000 | 15 | 20 | 8% | 80% | 98.8% |
| Example 41 | Triethylamine-hydrogen fluoride complex | None | Pt\|Pt | 1 : 5 | 3 | 30 | 1000 | 15 | 20 | 10% | 75% | 96.3% |

The determination methods are as follows.

(1) Determination of yield of sulfuryl fluoride Yield of sulfuryl fluoride = Output of sulfuryl fluoride (converted into moles) / Feed amount of sulfur dioxide (converted into moles) × 100%

(2) Determination of purity of sulfuryl fluoride

The purity of sulfuryl fluoride may be determined by quantitative analysis by gas chromatography (GC-FID/TCD).

Gas chromatography is an instrumental analysis method that is used to separate a mixture for determination on the basis that components in a sample have different distribution coefficients between a gas phase and a fixed liquid phase. When the sample is brought into a chromatographic column by a carrier gas for operation, the components are repeatedly distributed between the two phases and separated from one another after passing through a certain column length as the fixed phase has different adsorption or dissolving abilities to the components; the components leave the chromatographic column in the outflow order and enter a detector for detection, wherein a chromatographic peak outflow curve of each component is drawn on a recorder.

Under certain chromatographic conditions, any substance has definite retention parameters, such as retention time. Therefore, under the same chromatographic operation conditions, by comparing the retention time of a known pure sample and the retention time of an unknown substance, what the unknown substance is can be determined. The peak area is measured, and the mass fraction of the component to be measured can be determined by means of normalization.

According to the above results, it can be seen that in examples 1-41, sulfuryl fluoride is prepared by subjecting sulfur dioxide and the hydrogen fluoride complex to an electrofluorination reaction in an electrolytic cell, wherein the yield of sulfuryl fluoride is relatively high, all being 50% or more, the purity of sulfuryl fluoride is relatively high, all being 90% or more, the production cost of sulfuryl fluoride is reduced and the pollution is reduced.

In contrast, in comparative example 1, sulfuryl fluoride is prepared by subjecting sulfur dioxide and anhydrous hydrogen fluoride to an electrofluorination reaction in an electrolytic cell, wherein the yield of sulfuryl fluoride is lower than that in the examples of the present application, and the purity of sulfuryl fluoride is also lower than that in the examples of the present application.

As can be seen therefrom, according to the present application, by using a hydrogen fluoride complex as a fluorine source, the yield and purity of sulfuryl fluoride can be significantly increased, the production cost of sulfuryl fluoride can be reduced, thus making it suitable for industrial production.

Moreover, according to example 1 and example 2 in Table 1 above, it can be seen that by adding an conductive additive, the yield and purity of sulfuryl fluoride can be further improved.

Moreover, according to example 2, example 3 and example 4 in Table 1 above, it can be seen that by selecting a tri(lower alkyl)amine·hydrogen fluoride complex, an tetra(lower alkyl)ammonium fluoride·hydrogen fluoride complex and an aza-arene·hydrogen fluoride complex as a fluorine source, the higher yield and purity of sulfuryl fluoride can be obtained.

Moreover, according to example 2, example 5, example 6, example 7, example 8 and example 9 in Table 2 above, it can be seen that the higher yield and purity of sulfuryl fluoride can be obtained with and without a solvent, and the yield and purity of sulfuryl fluoride is higher without a solvent.

Moreover, according to example 2, example 10, example 11, example 12 and example 13 in Table 3 above, it can be seen that the electrode may be appropriately selected in the method for preparing sulfuryl fluoride by electrofluorination in the present application, wherein by using the electrode Pt | Pt, the yield and purity of sulfuryl fluoride can be further improved.

Moreover, according to example 2, example 14 and example 15 in Table 4 above, it can be seen that by making the molar ratio of the sulfur dioxide to the hydrogen fluoride complex be 1 : 3 to 1 : 10, the yield and purity of sulfuryl fluoride can be further improved.

Moreover, according to example 2, example 16, example 17 and example 18 in Table 5 above, it can be seen that by making the voltage range be 2-7 V, the yield and purity of sulfuryl fluoride can be further improved.

Moreover, according to example 2, example 19, example 20, example 21, example 22, and example 23 in Table 6 above, it can be seen that by making the current range be 10-100 A, the yield and purity of sulfuryl fluoride can be further improved.

Moreover, according to example 2, example 24, example 25, example 26 and example 27 in Table 7 above, it can be seen that by making the stirring speed be 300-2000 rpm, the yield and purity of sulfuryl fluoride can be further improved.

Moreover, according to example 2, example 28, example 29 and example 30 in Table 8 above, it can be seen that by making the stirring temperature be 10-30°C, the yield and purity of sulfuryl fluoride can be further improved.

Moreover, according to example 2, example 31 and example 32 in Table 9 above, it can be seen that by making the stirring time be 10-25 h, the yield and purity of sulfuryl fluoride can be further improved.

Moreover, according to example 2, example 33 and example 34 in Table 10 above, it can be seen that by using lithium fluoride, sodium fluoride and potassium fluoride as conductive additives, the yield and purity of sulfuryl fluoride can be further improved.

Moreover, according to example 2, example 35, example 36, example 37 and example 38 in Table 11 above, it can be seen that by making n in the general formula $R \cdot (HF)_n$ of the hydrogen fluoride complex be a number greater than 0 and less than or equal to 12, the yield and purity of sulfuryl fluoride can be further improved.

Moreover, according to example 2, example 39, example 40 and example 41 in Table 12 above, it can be seen that by making the addition amount of the conductive additive be 4-10 wt% of the hydrogen fluoride complex, the yield and purity of sulfuryl fluoride can be further improved.

## Industrial availability

By using the method for preparing sulfuryl fluoride by electrofluorination in the present application, the production cost of sulfuryl fluoride can be reduced, the purity and yield of sulfuryl fluoride can be improved, thus making it suitable for industrial production.

## Claims

1. A method for preparing sulfuryl fluoride by electrofluorination, wherein the method comprises

   a step of subjecting sulfur dioxide and a hydrogen fluoride complex to an electrofluorination reaction in an electrolytic cell,
   **characterized in that**
   the hydrogen fluoride complex is represented by a general formula $R \cdot (HF)n$, in which R represents an organic matter molecule, n represents a number greater than 0 and less than or equal to 12.

2. The method for preparing sulfuryl fluoride by electrofluorination according to claim 1, wherein
   n represents a number greater than 2 and less than or equal to 12.

3. The method for preparing sulfuryl fluoride by electrofluorination according to claim 1 or 2, wherein

   the hydrogen fluoride complex is at least one selected from a tri(lower alkyl)amine·hydrogen fluoride complex, an tetra(lower alkyl)ammonium fluoride·hydrogen fluoride complex and an aza-arene-hydrogen fluoride complex, and
   optionally, the hydrogen fluoride complex is at least one selected from a triethylamine·hydrogen fluoride complex, a pyridine·hydrogen fluoride complex, a melamine·hydrogen fluoride complex, a tetra-n-butylammonium difluoride·hydrogen fluoride complex, a tetramethylammonium fluoride·hydrogen fluoride complex, a tetraethylammonium fluoride·hydrogen fluoride complex and an N,N-diisopropylethylamine·hydrogen fluoride complex.

4. The method for preparing sulfuryl fluoride by electrofluorination according to any one of claims 1-3, wherein
   no solvent is used or at least one selected from acetonitrile, sulfolane, tetrahydrofuran, dimethyl carbonate, ethyl methyl carbonate, diethyl carbonate, ethyl acetate, propylene carbonate, isopropyl ether, N,N-dimethylformamide, N,N-dimethylacetamide, N-methyl-2-pyrrolidone, dimethyl sulfoxide, carbon tetrachloride, trichloroethylene and pyrrole is used as a solvent in the electrofluorination reaction.

5. The method for preparing sulfuryl fluoride by electrofluorination according to any one of claims 1-4, wherein
   no diluent gas is used in the electrofluorination reaction.

6. The method for preparing sulfuryl fluoride by electrofluorination according to any one of claims 1-5, wherein
   a molar ratio of the sulfur dioxide to the hydrogen fluoride complex is 1 : 3 to 1 : 10 in the electrofluorination reaction.

7. The method for preparing sulfuryl fluoride by electrofluorination according to any one of claims 1-6, wherein
   an electrode used in the electrofluorination reaction is Fe | C, Pt | C, Pt | Ni, Pt | Ag, Pt | Pt, C | C or Cu | C.

8. The method for preparing sulfuryl fluoride by electrofluorination according to any one of claims 1-7, wherein

a direct current regulated power supply is used in the electrofluorination reaction, with a voltage range of 2-7 V and/or a current range of 10-100 A.

9. The method for preparing sulfuryl fluoride by electrofluorination according to any one of claims 1-8, wherein constant-temperature stirring is performed in the electrofluorination reaction, with a stirring speed of 300-2000 rpm, a stirring temperature of 10-30°C and/or a stirring time of 10-25 h.

10. The method for preparing sulfuryl fluoride by electrofluorination according to any one of claims 1-9, wherein an alkali metal fluoride is used as a conductive additive in the electrofluorination reaction.

11. The method for preparing sulfuryl fluoride by electrofluorination according to claim 10, wherein

the alkali metal fluoride is at least one selected from lithium fluoride, sodium fluoride and potassium fluoride, and optionally, an addition amount of the alkali metal fluoride is 4-10 wt% of the hydrogen fluoride complex.


**Patentansprüche**

1. Verfahren zur Herstellung von Sulfurylfluorid durch Elektrofluorierung, wobei das Verfahren umfasst

einen Schritt des Unterwerfens von Schwefeldioxid und einem Fluorwasserstoffkomplex einer Elektrofluorierungsreaktion in einer Elektrolysezelle,
**dadurch gekennzeichnet, dass**
der Fluorwasserstoffkomplex durch eine allgemeine Formel R·(HF)n dargestellt ist, wobei R ein Molekül einer organischen Substanz darstellt und n eine Zahl größer als 0 und kleiner oder gleich 12 darstellt.

2. Verfahren zur Herstellung von Sulfurylfluorid durch Elektrofluorierung nach Anspruch 1, wobei n eine Zahl größer als 2 und kleiner oder gleich 12 darstellt.

3. Verfahren zur Herstellung von Sulfurylfluorid durch Elektrofluorierung nach Anspruch 1 oder 2, wobei

der Fluorwasserstoffkomplex mindestens einer ist, ausgewählt aus einem Tri(niederalkyl)amin·Fluorwasserstoffkomplex, einem Tetra(niederalkyl)ammoniumfluorid-Fluorwasserstoffkomplex und einem Aza-aren-Fluorwasserstoffkomplex, und
optional ist der Fluorwasserstoffkomplex mindestens einer, ausgewählt aus einem Triethylamin-Fluorwasserstoffkomplex, einem Pyridin-Fluorwasserstoffkomplex, einem Melamin-Fluorwasserstoffkomplex, einem Tetra-n-butylammoniumdifluorid·Fluorwasserstoffkomplex, einem Tetramethylammoniumfluorid-Fluorwasserstoffkomplex, einem Tetraethylammoniumfluorid·Fluorwasserstoffkomplex und einem N,N-Diisopropylethylamin-Fluorwasserstoffkomplex.

4. Verfahren zur Herstellung von Sulfurylfluorid durch Elektrofluorierung nach einem der Ansprüche 1-3, wobei kein Lösungsmittel verwendet wird oder mindestens eines, ausgewählt aus Acetonitril, Sulfolan, Tetrahydrofuran, Dimethylcarbonat, Ethylmethylcarbonat, Diethylcarbonat, Ethylacetat, Propylencarbonat, Isopropylether, N,N-Dimethylformamid, N,N-Dimethylacetamid, N-Methyl-2-pyrrolidon, Dimethylsulfoxid, Tetrachlorkohlenstoff, Trichlorethylen und Pyrrol, als Lösungsmittel in der Elektrofluorierungsreaktion verwendet wird.

5. Verfahren zur Herstellung von Sulfurylfluorid durch Elektrofluorierung nach einem der Ansprüche 1-4, wobei in der Elektrofluorierungsreaktion kein Verdünnungsgas verwendet wird.

6. Verfahren zur Herstellung von Sulfurylfluorid durch Elektrofluorierung nach einem der Ansprüche 1-5, wobei ein molares Verhältnis von Schwefeldioxid zu dem Fluorwasserstoffkomplex in der Elektrofluorierungsreaktion 1:3 bis 1:10 beträgt.

7. Verfahren zur Herstellung von Sulfurylfluorid durch Elektrofluorierung nach einem der Ansprüche 1-6, wobei eine in der Elektrofluorierungsreaktion verwendete Elektrode Fe | C, Pt | C, Pt | Ni, Pt | Ag, Pt | Pt, C | C oder Cu | C ist.

8. Verfahren zur Herstellung von Sulfurylfluorid durch Elektrofluorierung nach einem der Ansprüche 1-7, wobei in der Elektrofluorierungsreaktion ein gleichstromgeregeltes Netzgerät mit einem Spannungsbereich von 2-7 V und/oder einem Strombereich von 10-100 A verwendet wird.

9. Verfahren zur Herstellung von Sulfurylfluorid durch Elektrofluorierung nach einem der Ansprüche 1-8, wobei in der Elektrofluorierungsreaktion Rühren bei konstanter Temperatur durchgeführt wird, mit einer Rührgeschwindigkeit von 300-2000 U/min, einer Rührtemperatur von 10-30 °C und/oder einer Rührzeit von 10-25 h.

10. Verfahren zur Herstellung von Sulfurylfluorid durch Elektrofluorierung nach einem der Ansprüche 1-9, wobei ein Alkalimetallfluorid als leitfähigkeitsfördernder Zusatz in der Elektrofluorierungsreaktion verwendet wird.

11. Verfahren zur Herstellung von Sulfurylfluorid durch Elektrofluorierung nach Anspruch 10, wobei das Alkalimetallfluorid mindestens eines ist, ausgewählt aus Lithiumfluorid, Natriumfluorid und Kaliumfluorid, und optional beträgt die Zugabemenge des Alkalimetallfluorids 4-10 Gew.-% des Fluorwasserstoffkomplexes.

**Revendications**

1. Procédé de préparation du fluorure de sulfuryle par électrofluoration, le procédé comprenant

   une étape consistant à soumettre du dioxyde de soufre et un complexe de fluorure d'hydrogène à une réaction d'électrofluoration dans une cellule électrolytique,
   **caractérisé en ce que**
   le complexe de fluorure d'hydrogène est représenté par une formule générale R·(HF)n, dans laquelle R représente une molécule de matière organique, et n représente un nombre supérieur à 0 et inférieur ou égal à 12.

2. Procédé de préparation du fluorure de sulfuryle par électrofluoration selon la revendication 1, dans lequel n représente un nombre supérieur à 2 et inférieur ou égal à 12.

3. Procédé de préparation du fluorure de sulfuryle par électrofluoration selon la revendication 1 ou 2, dans lequel

   le complexe de fluorure d'hydrogène est au moins un élément sélectionné parmi un complexe tri(alkyle inférieur) amine·fluorure d'hydrogène, un complexe fluorure de tétra(alkyle inférieur)ammonium-fluorure d'hydrogène et un complexe aza-arène-fluorure d'hydrogène, et
   optionnellement, le complexe de fluorure d'hydrogène est au moins un élément sélectionné parmi un complexe triéthylamine·fluorure d'hydrogène, un complexe pyridine-fluorure d'hydrogène, un complexe mélamine-fluorure d'hydrogène, un complexe difluorure de tétra-n-butylammonium·fluorure d'hydrogène, un complexe fluorure de tétraméthylammonium-fluorure d'hydrogène, un complexe fluorure de tétraéthylammonium·fluorure d'hydrogène et un complexe N,N-diisopropyléthylamine-fluorure d'hydrogène.

4. Procédé de préparation du fluorure de sulfuryle par électrofluoration selon l'une quelconque des revendications 1 à 3, dans lequel
   aucun solvant n'est utilisé, ou au moins un solvant sélectionné parmi l'acétonitrile, le sulfolane, le tétrahydrofurane, le carbonate de diméthyle, le carbonate d'éthyle et de méthyle, le carbonate de diéthyle, l'acétate d'éthyle, le carbonate de propylène, l'éther isopropylique, le N,N-diméthylformamide, le N,N-diméthylacétamide, le N-méthyl-2-pyrrolidone, le diméthylsulfoxyde, le tétrachlorure de carbone, le trichloroéthylène et le pyrrole, est utilisé comme solvant dans la réaction d'électrofluoration.

5. Procédé de préparation du fluorure de sulfuryle par électrofluoration selon l'une quelconque des revendications 1 à 4, dans lequel
   aucun gaz diluant n'est utilisé dans la réaction d'électrofluoration.

6. Procédé de préparation du fluorure de sulfuryle par électrofluoration selon l'une quelconque des revendications 1 à 5, dans lequel
   un rapport molaire du dioxyde de soufre au complexe de fluorure d'hydrogène est de 1:3 à 1:10 dans la réaction d'électrofluoration.

7. Procédé de préparation du fluorure de sulfuryle par électrofluoration selon l'une quelconque des revendications 1 à 6, dans lequel

une électrode utilisée dans la réaction d'électrofluoration est Fe | C, Pt | C, Pt | Ni, Pt | Ag, Pt | Pt, C | C ou Cu | C.

8. Procédé de préparation du fluorure de sulfuryle par électrofluoration selon l'une quelconque des revendications 1 à 7, dans lequel

une alimentation régulée en courant continu est utilisée dans la réaction d'électrofluoration, avec une plage de tension de 2 à 7 V et/ou une plage de courant de 10 à 100 A.

9. Procédé de préparation du fluorure de sulfuryle par électrofluoration selon l'une quelconque des revendications 1 à 8, dans lequel

une agitation à température constante est effectuée dans la réaction d'électrofluoration, avec une vitesse d'agitation de 300 à 2000 tr/min, une température d'agitation de 10 à 30 °C et/ou un temps d'agitation de 10 à 25 h.

10. Procédé de préparation du fluorure de sulfuryle par électrofluoration selon l'une quelconque des revendications 1 à 9, dans lequel

un fluorure de métal alcalin est utilisé comme additif conducteur dans la réaction d'électrofluoration.

11. Procédé de préparation du fluorure de sulfuryle par électrofluoration selon la revendication 10, dans lequel le fluorure de métal alcalin est au moins un élément sélectionné parmi le fluorure de lithium, le fluorure de sodium et le fluorure de potassium, et

optionnellement, la quantité ajoutée de fluorure de métal alcalin est de 4 à 10 % en poids du complexe de fluorure d'hydrogène.

**EP 4 276 063 B1**

**Patent documents cited in the description**

- US 3497427 A